# EUROPÄISCHE PATENTSCHRIFT

(11) **EP 2 009 214 B1**
(45) Veröffentlichungstag und Bekanntmachung des Hinweises auf die Patenterteilung: **17.12.2014**
(21) Anmeldenummer: 08159199.2
(22) Anmeldetag: 27.06.2008
(51) Int. Cl.: E05F 15/16, E05D 15/06

(54) **Verbindungsstück zum Verbinden zweier Führungsschienen und Führungsschiene**
Connecting piece for connecting two guide rails and guide rail
Pièce de liaison destinée au raccordement de deux rails de guidage et rail de guidage

(30) Priorität: 29.06.2007 DE 202007009133 U
(43) Veröffentlichungstag der Anmeldung: 31.12.2008
(73) Patentinhaber: Assa Abloy Entrance Systems AB, 261 22 Landskrona (SE)
(72) Erfinder: Schwarz, Bernhard, Unterneuhausen 84107 Weihmichl (DE)
(74) Vertreter: Zacco Sweden AB

(56) Entgegenhaltungen:
- US-A- 902 221
- US-A- 1 945 332
- US-A- 2 513 088
- US-A- 3 431 585
- US-A- 4 512 680
- US-A- 4 516 874
- US-A- 5 174 676

## Beschreibung

Die vorliegende Erfindung betrifft ein Verbindungsstück zum Verbinden zweier, im Querschnitt C-förmiger Führungsschienen für ein zu führendes Element eines Tores, wie beispielsweise dem Schlitten eines Torantriebs. Darüber hinaus betrifft die vorliegende Erfindung eine derartige Führungsschiene sowie eine Kombination aus wenigstens einem Verbindungsstück und wenigstens zwei Führungsschienen.

Im Stand der Technik sind Verbindungsstücke zum Verbinden zweier, im Querschnitt C-förmiger Führungsschienen für ein zu führendes Element eines Tores bekannt, die einen Körper mit einem C-förmigem Querschnitt umfassen, der größer ist als der der Führungsschienen, so dass die Führungsschienen in den Körper einschiebbar sind. Ferner weist das bekannte Verbindungsstück wenigstens einen Anschlag auf einer Grundfläche des Körpers auf, an dem beidseits jeweils eine der Führungsschienen stirnseitig in Anlage bringbar ist. Die bekannten im Querschnitt C-förmigen Führungsschienen sowie der C-förmige Querschnitt des Körpers sind derart ausgelegt, dass bei in den Körper des Verbindungsstücks eingeschobenen Führungsschienen diese reibschlüssig gehalten werden.

Im Stand der Technik werden diese Führungsschienen sowie das Verbindungsstück mit Toleranzabweichungen von ± 0,3 mm hergestellt. Dies kann einerseits zu einem Wackeln der verbundenen Führungsschienen in dem Verbindungsstück führen und andererseits kann beim Montieren eine Verformung der Führungsschienen und/oder des Verbindungsstücks auftreten. Darüber hinaus ist die Ausgestaltung des Standes der Technik hinsichtlich der Montage ungünstig, da die gesamte Außenfläche der Führungsschienen, die in das Verbindungsstück bzw. dessen Körper eingeschoben wird, schleift, was ggf. schwergängig sein kann.

Darüber hinaus liegen die bekannten Führungsschienen stirnseitig an dem wenigstens einem vorgesehenen Anschlag an. Dies hat zum einen den Nachteil, dass zwischen benachbarten Stirnseiten der Führungsschienen, die über das Verbindungsstück verbunden werden, ein Zwischenraum verbleibt. Insbesondere wenn die Führungsschienen zum Führen eines Schlittens des Antriebs eines Tores, z. B. eines Garagentores, verwendet werden, besteht die Problematik, dass der Schlitten beim Überfahren des Zwischenraums Geräusche verursacht und es darüber hinaus zu einem Verhaken des Schlittens im Zwischenraum kommen kann.

US 2,513,088 offenbart ein Verbindungsstück zum Verbinden zweier Führungsschienen für Scheunentore. Das Verbindungsstück umfasst einen Anschlag, der sich durch das Innere des Verbindungsstücks erstreckt. Beidseitig des Anschlags ist jeweils eine der Führungsschienen stirnseitig in Anlage bringbar.

US 3,431,585 beschreibt ein Verbindungsstück zum Verbinden zweier Führungsschienen, wobei in das Verbindungsstück von oben Schrauben einschraubbar sind, so dass deren Enden auf eine Grundfläche der in das Verbindungsstück eingesteckten Führungsschienen drücken, um die Führungsschienen im Verbindungsstück zu fixieren.

Angesichts der obigen Problematik besteht die Aufgabe der vorliegenden Erfindung darin, die eingangs genannten Verbindungsstücke und Führungsschienen derart weiterzubilden, dass unabhängig von Toleranzabweichungen ein Wackeln der verbundenen Führungsschienen und/oder eine Verformung des Verbindungsstücks und/oder der Führungsschienen bei gleichzeitig verbesserter Montagefreundlichkeit vermieden werden und zugleich durch das zu führende Element erzeugte Geräusche sowie ein Verhaken des Elements verhindert werden.

Diese Aufgabe wird durch ein Set aus wenigstens zwei Führungsschienen und wenigstens einem Verbindungsstück gemäß Anspruch 1 gelöst.

Der vorliegenden Erfindung liegt der Gedanke zu Grunde nicht wie im Stand der Technik die gesamte Außenfläche der Führungsschiene im Verbindungsbereich auf dem Körper des Verbindungsstücks schleifen zu lassen, sondern wenigstens eine Erhebung in der Grundfläche des Körpers vorzusehen, die die einzige Schleiffläche auf der Grundfläche des Körpers bildet. D. h. die Unterseite der Führungsschiene schleift ausschließlich über die Erhebung auf der Grundfläche des Körpers des Verbindungsstücks. Andererseits liegt der vorliegenden Erfindung der Gedanke zu Grunde die Führungsschiene im Bereich des Anschlags derart auszusparen, dass bei über ein Verbindungsstück verbundenen Führungsschienen die Führungsschienen stirnseitig aneinander anliegen und damit ein Zwischenraum zwischen den Führungsschienen vermieden wird. Letzteres führt zu einer deutlich erhöhten Stabilität der Kombination aus Verbindungsstück und zwei Führungsschienen sowie einer erheblichen Materialeinsparung, die sich darin wiederspiegelt, dass das Verbindungsstück deutlich kürzer ausgestaltet werden kann.

Die vorliegende Erfindung bildet ein Verbindungsstück der eingangs genannten Art folglich derart weiter, dass beidseits des Anschlags jeweils wenigstens eine Erhebung in der Grundfläche des Körpers vorgesehen ist, die derart dimensioniert ist, dass die Führungsschienen über das Verbindungsstück kraftschlüssig miteinander verbindbar sind.

Gemäß einer bevorzugten Ausführungsform der vorliegenden Erfindung sind beidseits des Anschlags jeweils wenigstens drei Erhebungen in der Grundfläche des Körpers vorgesehen, die dreieckig gruppiert sind. Dadurch wird ein Kippen der Führungsschienen um die Erhebungen vermieden und ein stabiles Einführen der Führungsschienen in das Verbindungsstück bzw. dessen Körper gewährleistet.

Dabei ist es von Vorteil, dass die Grundfläche der dreieckigen Gruppierung parallel zu dem Anschlag angeordnet ist, um insbesondere im Bereich des Anschlags eine gute Fixierung der Führungsschienen zu gestatten.

Es hat sich als kostengünstig und vorteilhaft erwiesen die Erhebungen erfindungsgemäß durch Prägungen von der Aussenseite der Grundfläche her auszubilden.

Darüber hinaus hat sich hinsichtlich des Kraftschlusses und der Montagefreundlichkeit gezeigt, dass die Höhe der Erhebungen in einem Bereich zwischen 0,5 und 0,7 mm liegen sollte und vorzugsweise 0,6 mm beträgt.

Die Oberfläche der Erhebung liegt vorzugsweise zwischen 2 und 6 mm² und vorteilhafterweise bei ungefähr 3 mm². Handelt es sich um Erhebungen mit einer kreisförmigen Oberfläche, so liegt deren Durchmesser bei ungefähr 2 mm.

Gleichermaßen wie die Erhebungen werden die Anschläge des Verbindungsstücks bevorzugterweise ebenfalls durch eine Prägung von der Unterseite der Grundfläche her ausgebildet, wobei es bevorzugt ist, dass der Anschlag in der Draufsicht eine rechteckige Form aufweist und aus zwei Elemente, d. h. zwei nebeneinander angeordneten Anschlägen ausgebildet ist.

Die Führungsschiene des Sets der vorliegenden Erfindung kennzeichnet sich gegenüber denen des Standes der Technik insbesondere dadurch aus, dass die Führungsschiene eine Aussparung umfasst, die stirnseitig in der Grundfläche vorgesehen ist, so dass sie bei in ein Verbindungsstück eingeschobener Führungsschiene den Anschlag wenigstens teilweise aufnimmt.

Dabei ist es bevorzugt, dass die Aussparung den Anschlag zur Hälfte aufnimmt, d. h. zwei eingeführte Führungsschienen umschließen den Anschlag zusammen, um dadurch den Zwischenraum zwischen den Stirnseiten der Führungsschienen zu eliminieren.

Sind in dem Verbindungsstück zwei parallel angeordnete Anschläge vorgesehen, wie es oben erwähnt wurde, so werden auch zwei nebeneinander angeordnete Aussparungen in der Führungsschiene vorgesehen. Bei rechteckig ausgebildetem Anschlag sind entsprechend auch die Aussparungen rechteckig ausgebildet. D. h. die Aussparungen sind in ihrer Form an die Form des Anschlags angepasst.

Die vorliegende Erfindung schlägt eine Kombination aus wenigstens einem Verbindungsstück, wie es oben erläutert wurde und wenigstens zwei Führungsschienen, wie zuvor beschrieben, vor.

Weitere Merkmale und Vorteile der vorliegenden Erfindung sind aus der folgenden Beschreibung einer bevorzugten Ausführungsform ersichtlich, die unter Bezugnahme auf die begleitenden Zeichnungen erfolgt.

In den Zeichnungen zeigt:
Fig. 1 eine perspektivische Ansicht eines erfindungsgemäßen Verbindungsstücks mit zwei zum Verbinden vorgesehenen erfindungsgemäßen Führungsschienen;
Fig. 2A zeigt eine Draufsicht auf die in Fig. 1 dargestellte Kombination;
Fig. 2B eine Vergrößerung des Abschnitts B aus Fig. 2A; und
Fig. 3 eine Draufsicht auf die Kombination aus Fig. 1 mit eingeschobenen Führungsschienen.

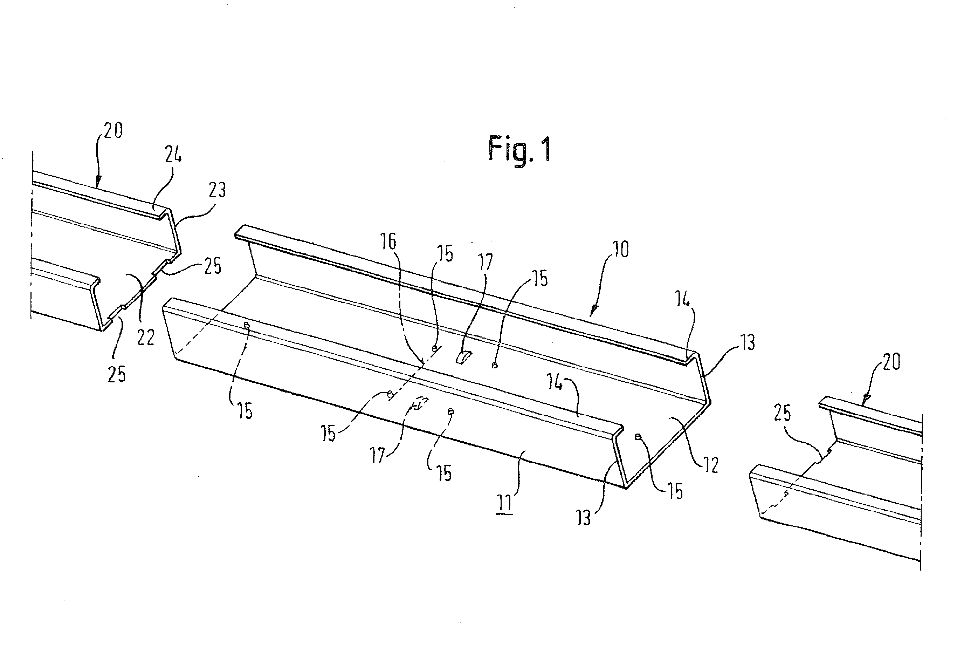

Fig. 1 zeigt ein Verbindungsstück 10 zum Verbinden zweier Führungsschienen 20 zum Führen des Schlittens eines motorischen Antriebs für ein Garagentor. Das Verbindungsstück 10, das vorzugsweise aus gewalztem Metall besteht, ist aus einem Körper 11 gebildet. Der Körper 11 weist einen C-förmigen Querschnitt auf. Dieser C-förmige Querschnitt ist gebildet durch eine Grundfläche 12, Schenkel 13, die von der Grundfläche 12 im rechten Winkel aufragen und Nasen 14, die von den Schenkeln 13 rechtwinklig abragen und damit parallel zur Grundfläche 12 verlaufen. Der C-förmige Querschnitt ist größer dimensioniert als der entsprechende C-förmige Querschnitt der Führungsschienen 20, so dass die Führungsschienen 20 in das Verbindungsstück 10 bzw. dessen Körper 11 einschieb- bzw. einführbar sind.

Bei der dargestellten Ausführungsform sind in Längserstreckung in der Mitte des Verbindungsstücks 10 bzw. des Körpers 11 zwei Anschläge 17 in der Grundfläche 12 ausgebildet. Vorteilhafterweise werden diese Anschläge 17, die in ihrer Form in der Draufsicht im Wesentlichen rechteckig sind, durch Prägen von der Unterseite der Grundfläche 12 her gebildet. Die Anschläge 17 sind in Querrichtung des Körpers 11 auf gleicher Höhe, d. h. parallel zueinander angeordnet und bilden in Längsrichtung beidseits einen Anschlag für die Führungsschienen 20 (siehe später).

Darüber hinaus sind beidseits des Anschlags bzw. der Anschläge 17 Erhebungen 15 vorgesehen, die durch Prägen von der Unterseite der Grundfläche 12 her gebildet sind. Sie weisen bei der dargestellten Ausführungsform eine Höhe von 0,6 mm von der Grundfläche 12 in Richtung der Nasen 14 auf und sind dreieckig gruppiert. Die Grundfläche 16 der dreieckigen Gruppierung ist dabei parallel zu den Anschlagsflächen der Anschläge 17 ausgerichtet. Die Erhebungen 15 sind mit einer im Wesentlichen kreisförmigen Oberfläche ausgestaltet, die einen Durchmesser von ungefähr 2 mm aufweist.

Wie es aus Fig. 1 ist, ist das Mittelstück 10 symmetrisch ausgestaltet, so dass es in einer beliebigen Ausrichtung verwendet werden kann.

Die Führungsschienen 20 weisen ebenfalls einen C-förmigen Querschnitt auf. Dieser wird gleichermaßen wie bei dem Verbindungsstück durch eine Grundfläche 22, davon im rechten Winkel abragenden Schenkel 23 sowie von diesen wiederum im rechten Winkel abragenden Nasen 24 gebildet. Wie es bereits eingangs erwähnt wurde, sind die Querschnitte der Führungsschienen 20 und des Verbindungsstücks 10 derart aufeinander abgestimmt, dass die Führungsschienen in das Verbindungsstück eingeschoben bzw. eingeführt werden können, um die zwei Führungsschienen 20 miteinander zu verbinden. Darüber hinaus weisen die Führungsschienen 20 stirnseitig zwei Aussparungen 25 auf, die in ihrer Positionierung, Form und Größe derart an die Anschläge 17 des Verbindungsstücks 10 angepasst sind, dass die Führungsschienen 20, wenn sie in das Verbindungsstück 10 eingeschoben sind, stirnseitig aneinander anliegen und die Anschläge 17 in den Aussparungen 25 der beiden Führungsschienen 20 aufgenommen, d. h. von diesen umgeben, sind.

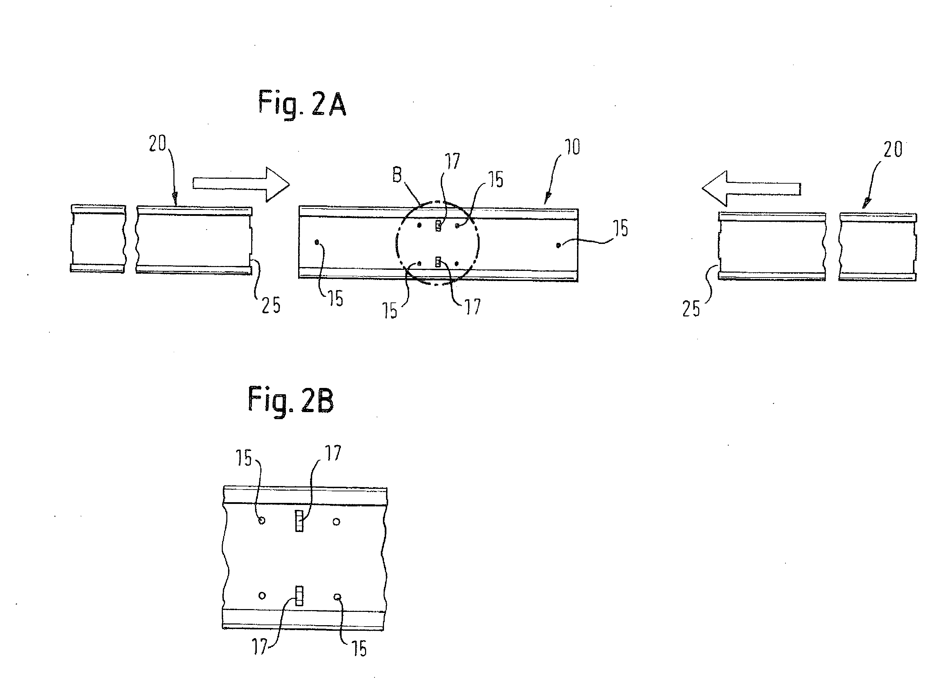

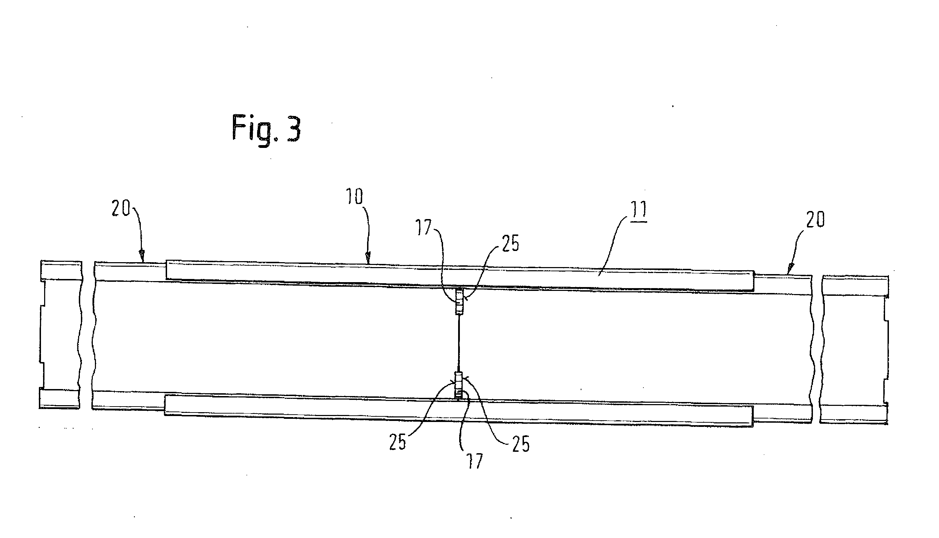

Unter Bezugnahme auf die Fig. 2A, 2B und 3 wird im Folgenden die Montage der Kombination aus Verbindungsstück 10 und Führungsschienen 20 erläutert.

Zunächst werden die Führungsschienen 20 mit ihrem Querschnitt derart ausgerichtet, dass sie in den Querschnitt des Verbindungsstücks 10 eingeschoben werden können. Beim Einschieben gleitet die Grundfläche 22 der Führungsschienen 20 über die Oberflächen der Erhebungen 15 und wird unter Kraftaufwendungen weiter geschoben bis die Stirnseiten der Aussparungen 25 an den Anschlagsflächen der Anschläge 17 zur Anlage kommen. Dabei sind die Aussparungen 25 derart ausgestaltet, dass sie den Anschlage 17 in Längsrichtung des Verbindungsstücks 10 ungefähr zur Hälfte aufnehmen. Sind beide Führungsschienen in das Verbindungsstück 10 eingeschoben, wie es in Fig. 3 dargestellt ist, so liegen die Führungsschienen 20 stirnseitig aneinander an, wobei die Stirnseiten der Aussparungen 25 an den Anschlagflächen der Anschläge 17 zur Anlage kommen.

Durch die Erhebungen 15 können entsprechend Toleranzabweichungen ausgeglichen werden, d. h. sind die Querschnitte so hergestellt, dass ein Spaltmaß zwischen ihnen besteht, was zu einem Wackeln führen würde, so drücken die Erhebungen 15 die Grundfläche 22 der Führungsschienen 22 und damit die Nasen 24 mit deren Oberseite gegen die Unterseite der Nasen 14, so dass eine kraftschlüssige Befestigung gewährleistet ist, ohne dass die Führungsschienen im Verbindungsstück 10 wackeln. Weicht das Maß in die andere Richtung ab, d. h. der Querschnitt der Führungsschienen zu groß oder der des Verbindungsstücks zu klein, wird eine Verformung im Wesentlichen dadurch vermieden, dass die Auflagefläche sehr gering ist. Die Grundfläche 22 liegt nur auf den Erhebungen 15 auf. Auch ist es unter einem angemessenen Kraftaufwand möglich, dass sich nur die Erhebungen 15 verformen, nicht aber die Führungsschienen oder das Verbindungsstück 10.

Darüber hinaus ist, wie es aus Fig. 3 am besten ersichtlich ist, zwischen den eingesetzten Führungsschienen 20 kein Zwischenraum mehr vorhanden, sondern diese liegen stirnseitig aneinander an. Eine Geräuschentwicklung durch Überfahren des Zwischenraums durch den Schlitten und/oder ein Verhaken des Schlittens in dem Zwischenraum werden daher wirksam ausgeschlossen.

Die vorliegende Erfindung bietet jedoch nicht nur die oben erwähnten Vorteile, sondern führt darüber hinaus zu einer insgesamt stabileren Führungsschiene bestehend aus wenigstens zwei Führungsschienen 20 und wenigstens einem Verbindungsstück 10 und ermöglicht darüber hinaus eine Materialeinsparung, die sich dadurch ergibt, dass das Verbindungsstück 10 in Längsrichtung kürzer ausgestaltet werden kann als beim Stand der Technik.

Dementsprechend verbessert die vorliegende Erfindung die Systeme des Standes der Technik in großem Maße. Definiert ist die vorliegende Erfindung durch die folgenden Patentansprüche.

## Patentansprüche

1. Set aus wenigstens zwei Führungsschienen (20) und wenigstens einem Verbindungsstück (10) zum Verbinden zweier, im Querschnitt C-förmiger Führungsschienen (20) für ein zu führendes Element eines Tores,
das Verbindungsstück (10) umfassend
einen Körper (11) mit C-förmigem Querschnitt, der grösser ist als der der Führungsschienen (20), so dass die Führungsschienen (20) in den Körper (11) einschiebbar sind, und
wenigstens einem Anschlag (17) auf einer Grundfläche (12) des Körpers (11), an dem beidseits jeweils eine der Führungsschienen (20) stirnseitig in Anlage bringbar ist,
wobei beidseits des Anschlags (17) jeweils wenigstens eine Erhebung (15) in der Grundfläche (12) des Körpers (11) vorgesehen ist, die derart dimensioniert ist, dass die Führungsschienen (20) über das Verbindungsstück (10) kraftschlüssig miteinander verbindbar sind, wobei die Erhebungen (15) durch Prägungen von der Außenseite der Grundfläche (12) des Körpers (11) gebildet sind; und die Führungsschienen (20) umfassend
eine Aussparung (25), die stirnseitig in einer Grundfläche (22) der Führungsschiene (20) vorgesehen ist, so dass sie bei eingeschobener Führungsschiene (20) den Anschlag (17) wenigstens teilweise aufnimmt.

2. Set nach Anspruch 1, bei der beidseits des Anschlags (17) jeweils wenigstens drei Erhebungen (15) in der Grundfläche (12) des Körpers (11) vorgesehen sind, die dreieckig gruppiert sind.

3. Set nach Anspruch 2, bei der die Grundfläche (16) der dreieckigen Gruppierung parallel zu dem Anschlag (17) angeordnet ist.

4. Set nach einem der vorstehenden Ansprüche, bei dem die Erhebungen (15) eine Höhe in einem Bereich zwischen 0,5 und 0,7 mm, vorzugsweise von 0,6 mm aufweisen.

5. Set nach einem der vorstehenden Ansprüche, bei dem die Erhebungen (15) eine Oberfläche zwischen 2 und 6 vorzugsweise ungefähr 3 mm² aufweisen.

6. Set nach einem der vorstehenden Ansprüche, bei dem der Anschlag (17) durch eine Prägung von der Außenseite der Grundfläche (12) des Körpers (11) gebildet ist.

7. Set nach einem der vorstehenden Ansprüche, bei dem der Anschlag (17) eine rechteckige Form aufweist.

8. Set nach einem der vorstehenden Ansprüche, bei dem zwei nebeneinander angeordnete Anschläge (17) vorgesehen sind.

9. Set nach einem der vorstehenden Ansprüche, bei der die Aussparung (25) derart ausgestaltet ist, dass der Anschlag (17) zur Hälfte aufnehmbar ist.

10. Set nach einem der vorstehenden Ansprüche, bei der zwei nebeneinander angeordnete Aussparungen (25) vorgesehen sind, in denen jeweils ein Anschlag (17) wenigstens teilweise aufnehmbar ist.

11. Set nach einem der vorstehenden Ansprüche, bei der die Aussparung (25) in Ihrer Form rechteckig ist.

## Claims

1. Set of at least two guide rails (20) and at least one connecting piece (10) for connecting two guide rails (20), which are C-shaped in the cross-section, for a gate's element to be guided,
the connecting piece (10) comprising
a body (11) with C-shaped cross-section being larger than that of the guide rails (20), so that the guide rails (20) can be inserted into the body (11), and at least one stop (17) on a base area (12) of the body (11), against which, on both sides, respectively one of the guide rails (20) can be brought into abutment on the front end,
wherein, on both sides of the stop (17), respectively at least one elevation (15) is provided in the base area (12) of the body (11) dimensioned such that the guide rails (20) can be connected to each other in a force-fit manner via the connecting piece (10), wherein the elevations (15) are formed by embossments from the outside of the base area (12) of the body (11); and
the guide rails (20) comprising
a recess (25) which, on the front end, is provided in a base area (22) of the guide rail (20) so that it at least partially receives the stop (17) with the guide rail (20) inserted.

2. Set according to claim 1, wherein, on both sides of the stop (17), respectively at least three elevations (15) are provided in the base area (12) of the body (11), which are triangularly grouped.

3. Set according to claim 2, wherein the base area (16) of the triangular grouping is arranged in parallel with the stop (17).

4. Set according to any of the preceding claims, wherein the elevations (15) have a height within an area between 0.5 and 0.7 mm, preferably of 0.6 mm.

5. Set according to any of the preceding claims, wherein the elevations (15) have a surface between 2 and 6 preferably approximately 3 mm².

6. Set according to any of the preceding claims, wherein the stop (17) is formed by an embossment from the outside of the base area (12) of the body (11).

7. Set according to any of the preceding claims, wherein the stop (17) has a rectangular shape.

8. Set according to any of the preceding claims, wherein two stops (17) arranged next to each other are provided.

9. Set according to any of the preceding claims, wherein the recess (25) is designed in such a way that the stop (17) can be received in half.

10. Set according to any of the preceding claims, wherein two recesses (25) arranged next to each other are provided within which respectively a stop (17) can be at least partially received.

11. Set according to any of the preceding claims, wherein the recess (25) has a rectangular shape.

## Revendications

1. Ensemble d'au moins deux rails de guidage (20) et d'au moins une pièce de liaison (10) destinée au raccordement de deux rails de guidage (20) avec une section transversale en forme de C pour un élément d'une porte à guider,
ladite pièce de liaison (10) comprenant
un corps (11) ayant une section transversale en forme de C qui est supérieure à celle des rails de guidage (20) si bien que les rails de guidage (20) peuvent être insérés dans le corps (11), et
au moins une butée (17) sur une base (12) du corps (11), sur les deux côtés de laquelle chacun des rails de guidage (20) pouvant être mis en appui contre la face d'extrémité antérieure,
aux deux côtés de la butée (17), respectivement, étant pourvue au moins une saillie (15) dans la base (12) du corps (11) qui est dimensionnée si bien que les rails de guidage (20) peuvent être reliés par force l'un à l'autre par l'intermédiaire de la pièce de liaison (10), lesdites saillies (15) étant formées par des bossages de la partie inférieure de la base (12) du corps (11); et lesdits rails de guidage (20) comprenant
un évidement (25) qui est pourvue à la face d'extrémité antérieure dans une base (22) des rails de guidage (20), si bien que lorsque les rails de guidage (20) sont insérés, il reçoit la butée (17) au moins partiellement.

2. Ensemble selon la revendication 1, dans lequel aux deux côtés de la butée, respectivement, (17) sont pourvues au moins trois saillies (15) dans la base (12) du corps (11) qui sont regroupées triangulairement.

3. Ensemble selon la revendication 2, dans lequel la base (16) du groupement triangulaire est disposée parallèlement à la butée (17).

4. Ensemble selon l'une des revendications précédentes, dans lequel les saillies (15) présentent une hauteur comprise entre 0,5 et 0,7 mm, de préférence de 0,6 mm.

5. Ensemble selon l'une des revendications précédentes, dans lequel les saillies (15) présentent une surface comprise entre 2 et 6 de préférence d'environ 3 mm².

6. Ensemble selon l'une des revendications précédentes, dans lequel la butée (17) est formée par un bossage de l'extérieur de la base (12) du corps (11).

7. Ensemble selon l'une des revendications précédentes, dans lequel la butée (17) présente une forme rectangulaire.

8. Ensemble selon l'une des revendications précédentes, dans lequel deux butées (17) juxtaposées sont pourvues.

9. Ensemble selon l'une des revendications précédentes, dans lequel l'évidement (25) est conçu d'une telle manière que la butée (17) peut être reçue dans sa moitié.

10. Ensemble selon l'une des revendications précédentes, dans lequel deux évidements (25) juxtaposés sont pourvus, dans lesquels une butée (17) respectivement peut être reçue au moins partiellement.

11. Ensemble selon l'une des revendications précédentes, dans lequel l'évidement (25) est de forme rectangulaire.
